# EUROPEAN PATENT APPLICATION

(11) **EP 4 685 326 A1**
(43) Date of publication of application: **28.01.2026**
(21) Application number: 25190733.3
(22) Date of filing: 21.07.2025
(51) Int. Cl.: E06B 3/273, B21D 53/74, B21D 47/04, B23P 11/00

(54) **APPARATUS OPTIMIZED FOR THE ASSEMBLY OF SEMI-FINISHED PRODUCTS FOR THE PRODUCTION OF THERMAL-BREAK PROFILES**

(30) Priority: 25.07.2024 IT 202400017266
(71) Applicant: Oemme S.p.A., 44122 Ferrara (IT)
(72) Inventor: RIZZI, Daniele, 30173 VENEZIA (IT); RESCA, Alessio, 44123 FERRARA (IT)
(74) Representative: Modiano, Micaela Nadia

(57) **Abstract**

An apparatus (1) optimized for the assembly of semi-finished products (S) for the production of thermal-break profiles, of the type comprising a first and a second profile part (S1, S2) which are provided with a first and a second longitudinal slot (C1, C2) which are adapted to define at least one insertion seat for at least one corresponding connecting partition (B) having a first and a second edge (B1, B2) which are mutually opposite and adapted to be accommodated, respectively, in the first and in the second slot (C1, C2), comprising:
- at least one transfer unit (2) for the transfer in sequence, along a substantially horizontal work path (D), in an advancement direction (A), of a first profile part (S1) arranged with at least one first slot (C1) directed upwards and of a second profile part (S2) arranged with at least one corresponding second slot (C2) directed downwards, the first and the second slot (C1, C2) being adapted to be arranged so as to face each other to define an insertion seat for a corresponding connecting partition (B),
- an assembly station (3) arranged downstream of the transfer unit (2) along the work path (D) in the advancement direction (A), which comprises a frame (4) for supporting at least one working unit (5);
the at least one working unit (5), in turn, comprises:
- a knurling assembly (8), comprising a knurling tool (9) which is associated with means (10) for rotary actuation of bidirectional type about a respective working axis (L), substantially horizontal and perpendicular to the work path (D), and is associated with the frame (4) with a position that can be varied along a first adjustment axis (A1), substantially vertical, the knurling tool (9) being positioned in a first position along the first adjustment axis (A1) and being rotationally actuated in a first direction (V1) about the working axis (L) for the machining of the first slot (C1) and being positioned in a second position along the first adjustment axis (A1) and being rotationally actuated in a second direction (V2) about the working axis (L) for the machining of the second slot (C2), and
- an insertion assembly (11) for the insertion of a connecting partition (B) along the first slot (C1) and, subsequently, along the second slot (C2) to obtain a semi-finished product (S) for the production of a thermal-break profile, which comprises a gripper (12) for retaining the partition which is associated with the frame (4) downstream of the knurling tool (9) along the work path (D) in the advancement direction (A) so that it can be moved between a grip configuration and a release configuration, in the grip configuration the gripper (12) being adapted to grip the connecting partition (B) at the second edge (B2) arranged above the first edge (B1).

## Description

The present invention relates to an apparatus optimized for the assembly of semi-finished products for the production of thermal-break profiles.

Thermal-break profiles are known, and are generally constituted by at least two aluminum profile parts, called "shells", obtained by extrusion and connected to each other by way of the interposition of one or more elongated connecting partitions, called "bars", made of thermally insulating material such as polyamide or other plastic material.

Each profile part is provided with at least one longitudinal slot, which is delimited by two mutually opposite ribs, called "ridges", one of which is deformable. The two profile parts are positioned adjacent to the respective slots in facing pairs to define at least one seat for accommodating a corresponding bar and with the corresponding deformable ribs arranged on the same side of the bar.

Such profiled elements are widely used in the sector of production of energy-saving door or window frames, in which the two profile parts are facing one toward the inside and one toward the outside of the room in which the door or window frame is mounted, with the interposition of an air chamber, defined between the profile parts and the bars, which acts as a thermal barrier.

The process of production of a thermal-break profile entails the following processing steps:
- knurling of the slots provided on the pair of profile parts to be assembled;
- introduction of at least one bar along a corresponding pair of mutually facing slots of the adjacent profile parts so as to obtain an intermediate semi-finished product;
- bending-back of the deformable ribs so as to obtain the fastening in place of the at least one bar inside the corresponding slots and, therefore, the assembly of the profiled element.

Various types of apparatuses are known for executing the steps of knurling the profile parts and for inserting one or more bars between those same profile parts.

In a first version of a conventional apparatus, two knurling machines operate in parallel, one on each profile part to be assembled, and a third station inserts the bars along the knurled slots of the two profile parts so as to obtain the semi-finished product.

After the knurling has been executed, each profile part needs to be moved from the unloading region of the knurling machine to the station for inserting the bars, where the two profile parts are positioned one on top of the other with the respective slots facing each other. In the station for inserting the bars, one of the two profile parts must therefore be overturned and kept in position suspended above the other one.

This conventional solution is not devoid of drawbacks. Firstly, providing for three separate working regions with respective machines and apparatuses (two for knurling the profile parts and one for inserting the bars) necessitates setting aside adequate space for the plant and is expensive. Furthermore, the need to move both of the profile parts toward the insertion station, and moreover overturning one of the two profile parts and keeping it in the overturned position, requires the intervention of several operators and lengthens the time required to complete the operation, with reduction in productivity and increase in the costs of executing the pre-assembly of each profiled element. Also, movement of the profile parts entails the risk of their being subjected to shocks with consequent damage, especially if they are already painted.

To partially resolve these drawbacks, a second version of a pre-assembly apparatus is known which has a first station in which the knurling of a first profile part is executed by a first knurling machine and, simultaneously, a bar for each slot is inserted so as to obtain a first semi-finished product, and a second knurling machine processes a second profile part and simultaneously couples it to the first semi-finished product, so as to obtain the pre-assembled profiled element. The first semi-finished product, constituted by the first profile part coupled to one or more bars inserted in the corresponding slots, needs to be transferred downstream of the second knurling machine, so that the second profile part in output from that machine is coupled along the bars, completing the pre-assembly.

In the transfer step, the first semi-finished product is overturned in order to be positioned downstream of the second knurling machine in an upturned position, with the bar(s) protruding downwards. In this case, in addition to the risk of damaging the first profile part, it is also a rather complicated matter to keep it in the correct position during the insertion of the second profile part, while preventing it from being decoupled from the bars which are not yet clamped in the corresponding slots.

In a variation, the first profile part with one or more bars is positioned downstream of the second knurling machine with the bars directed upwards and the second knurling machine works from below on the second profile part positioned with its slots directed downwards, so as to be coupled along the bars, which protrude upwards with respect to the first profile part, in output from that machine. In this case too, although there is no overturning of the semi-finished product, the need to move it entails lengthening the cycle times, as well as the risk of damaging it.

Both of these solutions still entail the need for two knurling machines and an adequate number of trained operators to supervise the machining and to manage the movement of the first profile parts.

Therefore this second conventional solution, although an improvement over the previous solution, also entails encumbrances and installation costs that are not inconsiderable. Furthermore, in this case too, the need to move the first profile part with the bars in order to couple it to the second profile part requires the intervention of trained operators and consequent execution times, which have a negative influence on costs and on machining productivity.

The aim of the present invention is to provide an apparatus optimized for the assembly of semi-finished products for the production of thermal-break profiles which is capable of improving the known art in one or more of the abovementioned aspects.

Within this aim, an object of the invention is to offer compact space occupation in order to facilitate its installation.

Another object of the present invention is to reduce the number of machines and apparatuses used to reduce the purchase cost and to limit the maintenance interventions required.

Another object of the present invention is to minimize the need for intervention by trained operators, so as to reduce the use of labor and the consequent running costs.

Another object of the present invention is to not require the profile parts to be moved between one processing step and another, in order to eliminate the consequent downtimes and the risk of damaging the profile parts, so optimizing the productivity and efficiency of the process.

A further object of the present invention is to overcome the drawbacks of the background art in a manner that is alternative to any existing solutions.

Another object of the invention is to provide an apparatus optimized for the assembly of semi-finished products for the production of thermal-break profiles that is highly reliable, relatively easy to implement, and at low cost.

This aim and these and other objects which will become more apparent hereinafter are achieved by an apparatus optimized for the assembly of semi-finished products for the production of thermal-break profiles according to claim 1, optionally provided with one or more of the characteristics of the dependent claims.

This aim and these and other objects which will become more apparent hereinafter are also achieved by a method of assembling semi-finished products for the production of thermal-break profiles according to claim 20.

Further characteristics and advantages of the invention will become more apparent from the description of two preferred, but not exclusive, embodiments of the apparatus optimized for the assembly of semi-finished products for the production of thermal-break profiles according to the invention, which are illustrated for the purposes of non-limiting example in the accompanying drawings wherein:
- Figure 1 is a perspective view of a first embodiment of the apparatus optimized for the assembly of semi-finished products for the production of thermal-break profiles according to the invention;
- Figures 2 and 3 are respective side views of the transfer unit of the apparatus according to the invention in the configurations corresponding to the maximum and minimum working heights of the resting surface;
- Figure 4 is a cross-sectional view of a first type of semi-finished product for the production of thermal-break profiles obtainable by means of the apparatus of Figure 1;
- Figures 5-14 are respective enlarged side views of a portion of the apparatus of Figure 1 which comprises the assembly station in successive operating steps;
- Figures 15 and 16 are respective perspective views from different viewpoints of a second embodiment of the assembly station of the apparatus according to the invention;
- Figure 17 is a cross-sectional view of a second type of semi-finished product for the production of thermal-break profiles obtainable by means of an apparatus according to the invention which incorporates the assembly station of Figures 15 and 16.

With reference to the figures, the reference numeral 1 generally designates an apparatus optimized for the assembly of semi-finished products for the production of thermal-break profiles according to the invention.

The apparatus 1 makes it possible to obtain semi-finished products S destined for the production of thermal-break profiles, of the type comprising a first profile part S1 and a second profile part S2 which are constituted by respective extruded aluminum bars, each one of which is provided on its peripheral region with at least one first/second longitudinal slot C1 or C2 delimited by a pair of mutually opposite ribs N. In the assembled configuration, the profile parts S1 and S2 are arranged mutually adjacent with the corresponding first slot and second slot C1 and C2 facing each other, to define at least one seat for accommodating a corresponding connecting partition B, which is constituted by an elongated bar made of thermally insulating material, such as polyamide or other plastic material.

The connecting partition B has a first and a second edge B1 and B2 which are mutually opposite and adapted to be accommodated, respectively, in the first and in the second slot C1 and C2.

The cross-section of the profile parts S1 and S2 can have many shape structures according to the requirements of the specific case.

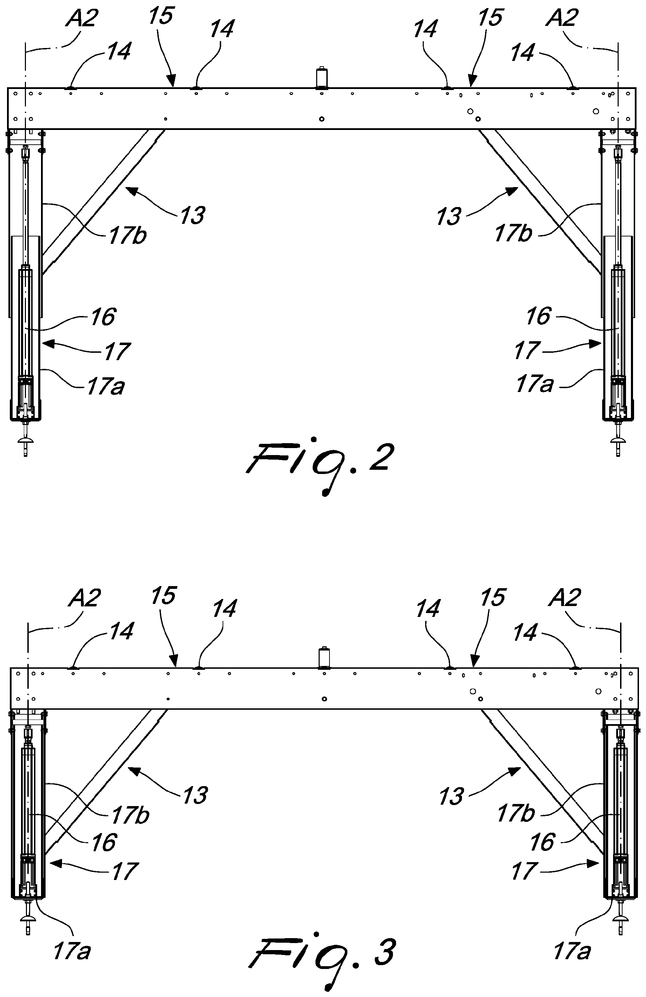

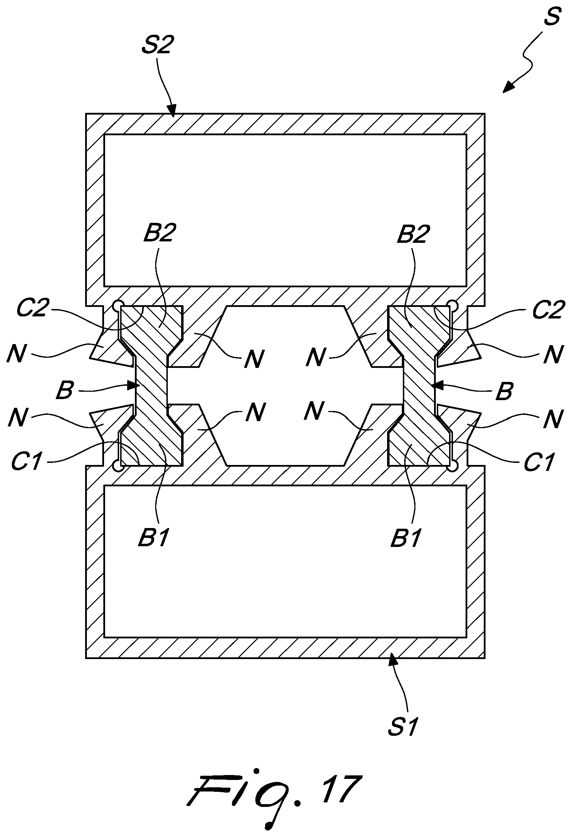

In particular the number of slots C provided on each profile part S1 or S2 can vary and as a consequence the number of connecting partitions B interposed between the profile parts in the semi-finished product S can also vary. For example Figure 2 shows a first version of a semi-finished product S, obtainable with a first embodiment of the apparatus 1, in which each profile part S1 or S2 comprises a single first/second slot C1 or C2 delimited by a pair of ribs N and a single connecting partition B interposed between those profile parts. Alternatively, Figure 17 shows a second version of a semi-finished product S, obtainable with a second embodiment of the apparatus 1, in which each profile part S1 or S2 comprises two first/second slots C1 or C2 which are substantially parallel, i.e. extending along substantially parallel directions, and are delimited by respective ribs N, and two connecting partitions B interposed between those profile parts, one for each seat defined by a first slot C1 and by the corresponding second slot C2.

Each profile part S1 or S2 has its ribs N protruding, and the remaining portion of the cross-section is all contained in a half-plane delimited by the outline of the plane from which those ribs protrude, in order to allow the assembly of the semi-finished product S.

Following assembly, the semi-finished product S is generally sent to a rolling machine, not shown as it is conventional, in which the ribs N facing outward from each first/second slot C1 or C2 are deformed and bent toward the ribs N opposite to them in order to clamp the connecting partition B to the profile parts S1 and S2, so obtaining a thermal-break profile.

The apparatus 1 is, therefore, typically incorporated in a plant for the production of thermal-break profiles, not shown, which comprises the aforementioned rolling machine arranged downstream of that apparatus, along the work path, in the advancement direction.

The apparatus 1 comprises at least one transfer unit 2 for the transfer in sequence, along a work path D in an advancement direction A, of the first profile part S1 arranged with the at least one first slot C1 directed upwards and of the second profile part S2 arranged with the at least one corresponding second slot C2 directed downwards, and an assembly station 3 arranged downstream of the transfer unit 2, along the work path D in the advancement direction A. In the preferred embodiment the advancement direction A is substantially horizontal.

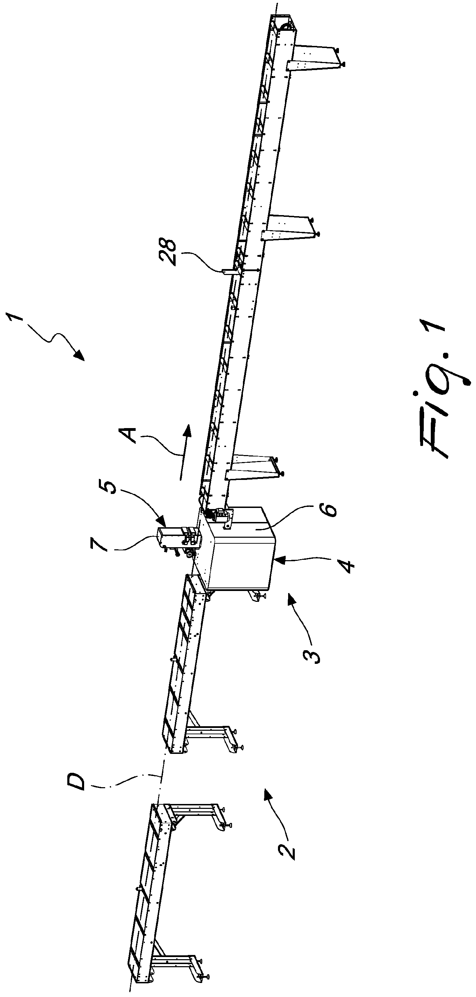

In the first embodiment, shown in Figure 1, there are two transfer units 2 arranged in series along the advancement direction D, but the possibility is not ruled out of there being a single transfer unit 2 or more than two transfer units 2 arranged in series.

In the present description the term "substantially" means "except for the usual machining tolerances and tolerances in the assembly of the component parts".

The assembly station 3 comprises a frame 4 for supporting at least one working unit 5. In the embodiment shown, the frame is comprised of a footing 6 which rests on the ground, above which rises at least one column 7, substantially vertically-extending, which supports a corresponding working unit 5.

The working unit 5 comprises:
- a knurling assembly 8, comprising a knurling tool 9 which is associated with means 10 for rotary actuation of bidirectional type about a respective working axis L, substantially horizontal and perpendicular to the work path D, and is associated with the column 7 with a position that can be varied along a first adjustment axis A1, substantially vertical. In use, the knurling tool 9 is positioned in a first position along the first adjustment axis A1 and is rotationally actuated in a first direction V1 about the working axis L for the machining of the first slot C1 and is positioned in a second position along the first adjustment axis A1 and is rotationally actuated in a second direction V2 about the working axis L for the machining of the second slot C2, and
- an insertion assembly 11 for the insertion of a connecting partition B along the first slot C1 and, subsequently, along the second slot C2 to obtain a semi-finished product S, which comprises a gripper 12 for retaining the partition which is associated with the column 7 downstream of the knurling tool 9 along the work path D in the advancement direction A, the gripper 12 being adapted to grip from above the connecting partition B at the second edge B2 arranged above the first edge B1.

In the first position the knurling tool 9 is adapted to work from above on the first slot C1 of the first profile part S1 directed upwards and the first direction V1 is oriented in such a manner as to impart a thrust to the first profile part in the direction of advancement A, i.e. anti-clockwise with respect to the figures.

In the second position the knurling tool 9 is adapted to work from below on the second slot C2 of the second profile part S2 directed downwards and the second direction V2 is oriented in such a manner as to impart a thrust to the second profile part in the direction of advancement A, i.e. clockwise with respect to the figures.

Each transfer unit 2 comprises a supporting structure 13 and a resting surface 14 of the first and the second profile part S1 and S2, which is substantially horizontal and is associated with the supporting structure 13 with a position that can be varied along a second adjustment axis A2 which is substantially vertical. The resting surface 14 extends along the work path D. Preferably the transfer unit 2 comprises conveyor means 15 which define the resting surface 14 for moving the first and the second profile part S1 and S2 in the advancement direction A, and are associated with the supporting structure 13 by interposition of first means of actuation 16 with alternating translation along the second adjustment axis A2. The resting surface 14 can, therefore, be positioned in different working configurations along the second adjustment axis A2, comprised between a minimum height and a maximum height, as a function of the dimensions of the profile parts S1 and S2 being worked on. However, the possibility is not ruled out that there could be discrete, i.e. non-continuous, adjustment of the work configuration of the resting surface 14 between the minimum height and the maximum height.

In the embodiment shown, the conveyor means 15 are of the type of a roller conveyor, idle or motorized, but the possibility is not ruled out that they could be a conveyor belt or the like. Furthermore, the supporting structure 13 comprises two telescopic supporting elements 17 which extend substantially vertically and are arranged at the longitudinal ends of the roller conveyor 15, each one of which is provided with a fixed portion 17a for resting on the ground and a movable portion 17b for connecting with the roller conveyor 15. The first means of actuation 16 comprise two linear actuators which act in a substantially vertical direction, each one of which is interposed between the portions 17a and 17b of a respective telescopic element 17.

Preferably the position of the knurling tool 9 along the first adjustment axis A1 can be adjusted continuously. The knurling assembly 8 also comprises second means of actuation with alternating translation of the knurling tool 9 along the first adjustment axis A1. The second means of actuation are interposed between the knurling tool 9 and the column 7. The second means of actuation, not shown in detail as they are of conventional type, can be electric motors for actuating controlled axes.

Advantageously, the knurling assembly 8 comprises at least one contrast member 19 of the knurling tool 9, which is associated with the column 7 so that it can be moved between at least one work configuration and a rest configuration.

The knurling assembly 8 also comprises fourth means of actuation for moving the at least one contrast member 19 between the work configuration and the rest configuration.

Preferably the at least one contrast member 19 is associated with the column 7 so that it can be moved continuously along the first adjustment axis A1. In this case the fourth means of actuation are adapted to move the at least one contrast member 19 along the first adjustment axis A1 toward/away from the knurling tool 9. The fourth means of actuation, not shown in detail as they are of conventional type, can be electric motors for actuating controlled axes.

Advantageously the knurling assembly 8 comprises two contrast members 19 arranged on opposite sides of the knurling tool 9 along the first adjustment axis A1, of which the lower member is adapted to abut from below against the first profile part S1 in the work configuration and the upper member to abut from above against the second profile part S2 in the work configuration.

The gripper 12 is associated with the column 7 so that it can be moved between a grip configuration and a release configuration of the connecting partition B.

The insertion assembly 11 also comprises third means of actuation for moving the gripper 12 between the grip configuration and the release configuration.

Preferably the gripper 12 is associated with the column 4 so that it can be moved along a third adjustment axis A3, substantially vertical, along which the grip and release configurations lie.

Even more preferably, the gripper 12 is associated with the column 7 so that it can be moved continuously along the third adjustment axis A3 and the third means of actuation are adapted to move the gripper 12 continuously along the third axis between the grip and release configurations.

The third means of actuation, not shown in detail as they are of conventional type, can be electric motors for actuating controlled axes.

Furthermore, the insertion assembly 11 comprises at least one supporting guide 21 arranged below the gripper 12 and associated with the column 7 so that it can be moved between at least one work configuration and a rest configuration. In the work configuration the guide 21 is placed in downward contact with the connecting partition B clamped in the gripper 12, while in the rest configuration it is moved away from the partition. Then there are fifth means of actuation for the movement of the guide 21 between the work configuration and the rest configuration. Preferably the guide 21 is associated with the column 7 so that it can be moved by sliding along the third adjustment axis A3 and the fifth means of actuation are adapted to move the guide 21 continuously along the third axis between the work and rest configurations. The position of the guide 21 along the third axis A3 can vary as a function of the size and of the geometry of the connecting partition B being machined.

The fifth means of actuation, not shown in detail as they are of conventional type, can be electric motors for actuating controlled axes.

The apparatus 1 further comprises a spacing unit 23 which is arranged downstream of the assembly station 3 along the work path D in the advancement direction A, and comprises a load-bearing structure 24 which supports a resting surface 25 for the first profile part S1 coupled with the at least one connecting partition B during assembly with the second profile part S2, so as to obtain the semi-finished product S. The resting surface 25 is substantially horizontal and extends along the work path D.

The height of the resting surface 25 is fixed.

The spacing unit 23 preferably comprises a plurality of rollers 26 which are associated with the load-bearing structure 24 and which rotate idly about the corresponding longitudinal axis, substantially horizontal and perpendicular to the work path D.

Furthermore the spacing unit 23 can comprise means of displacing the first profile part S1 away from the working unit 5, which are arranged downstream of the unit itself, in order to complete the insertion of the first profile part S1 along the connecting partition B. Such displacement means, not shown in the figures, can be of the type of a pusher acting along the work path D in the direction of advancement A.

Furthermore the spacing unit 23 comprises at least one motorized roller 27 associated with the load-bearing structure 24 which rotates about the corresponding longitudinal axis, substantially horizontal and perpendicular to the work path D. The direction of rotation R imposed on the motorized roller 27 agrees with the direction of advancement A at the upper portion of the roller, therefore the direction of rotation R is clockwise in the accompanying figures. The active (upper) surface of the motorized roller 27 lies on the resting surface 25. The motorized roller 27 is preferably arranged proximately to or at the end of the spacing unit 23 that is directed toward the assembly station 3.

Furthermore, the spacing unit 23 comprises a stroke limiting abutment 28 which can be moved between an active configuration, in which it protrudes above the resting surface 25 along the work path D, and a rest configuration, in which it is displaced with respect to the active configuration. In the embodiment shown the stroke limiting abutment 28 is associated with the load-bearing structure 24 which can be moved alternately in a vertical direction, and in the rest configuration it is lowered between the rollers 26 below the resting surface 25, but different movements of the stroke limiting abutment 28 are not ruled out, for example in a horizontal direction. Moving the stroke limiting abutment can be done by conventional actuation means, not shown, such as an electric motor for actuating controlled axes.

Finally the apparatus 1 comprises detection means of the position of the first and of the second profile part S1 and S2 along the work path D, and electronic management and control means associated in input with such detection means in order to receive the corresponding data and as a consequence actuate the transfer unit 2, the at least one working unit 5 and the spacing unit 23.

The detection means preferably comprise:
- at least one first sensor 29 for detecting the presence of the first or second profile part S2 or S2 at the knurling assembly 8. The first sensor 29 is associated with the column 7;
- at least one second sensor 30 for detecting the presence of the first profile part S1 upstream of the guide 21, for example a proximity sensor. The second sensor 30 is integral with the guide 21 in movement along the third axis A3;
- at least one third sensor 31 for detecting the presence of the second profile part S2 upstream of the gripper 12, for example a proximity sensor. The third sensor 30 is integral with the gripper 12 in movement along the third axis A3;
- at least one fourth sensor 32 for detecting the presence of the first or of the second profile part S1 or S2 at the unloading end of the transfer unit 2, for example an inductive sensor;
- at least one fifth sensor 33 for detecting the presence of the first profile part S1 at the loading end of the spacing unit 23, for example an inductive sensor.

The electronic management and control unit can be a conventional electronic board or Programmable Logic Controller (PLC) adapted to manage the operating cycle of the apparatus 1 which will be described below.

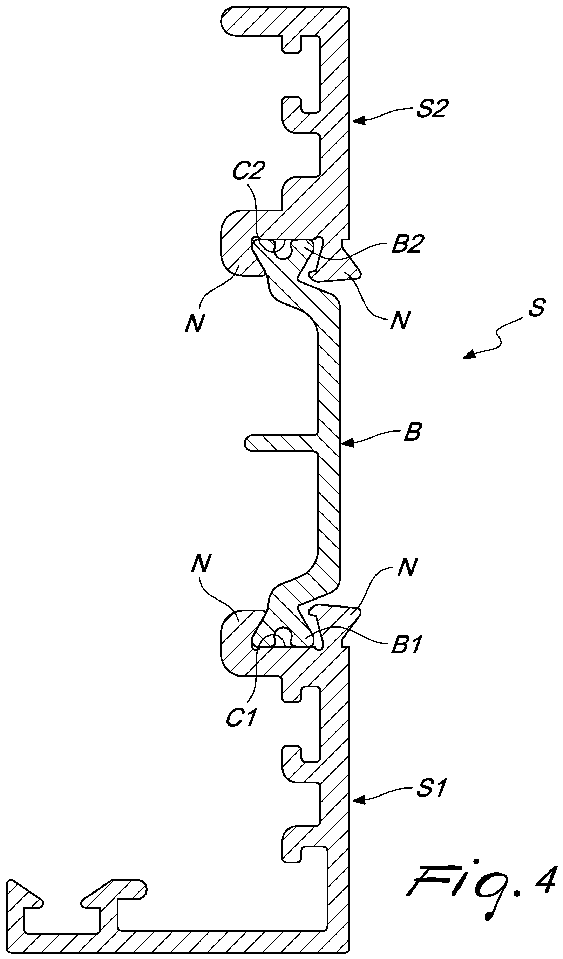

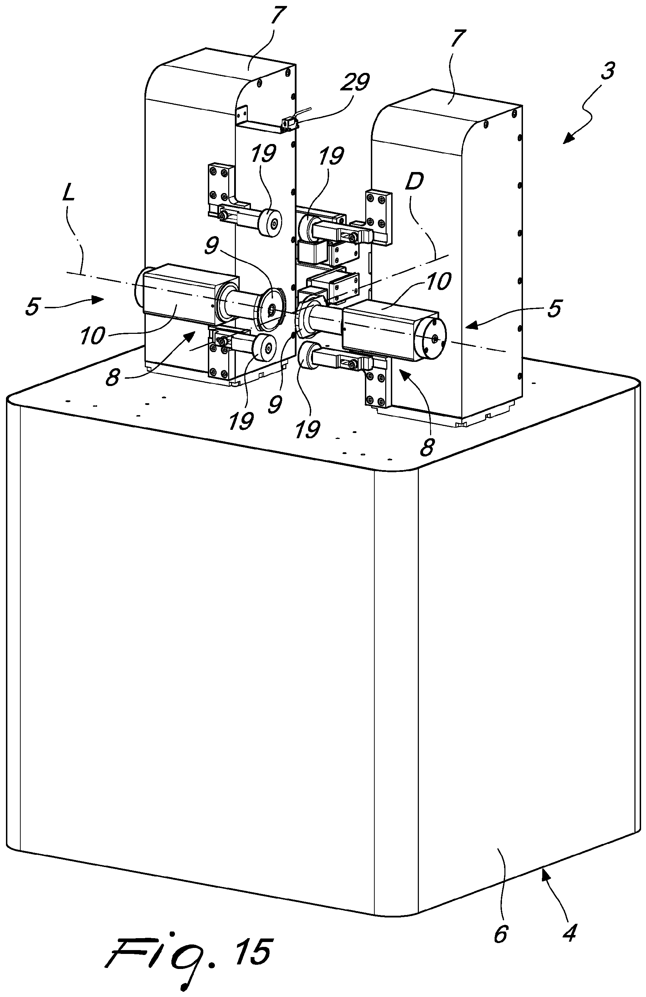

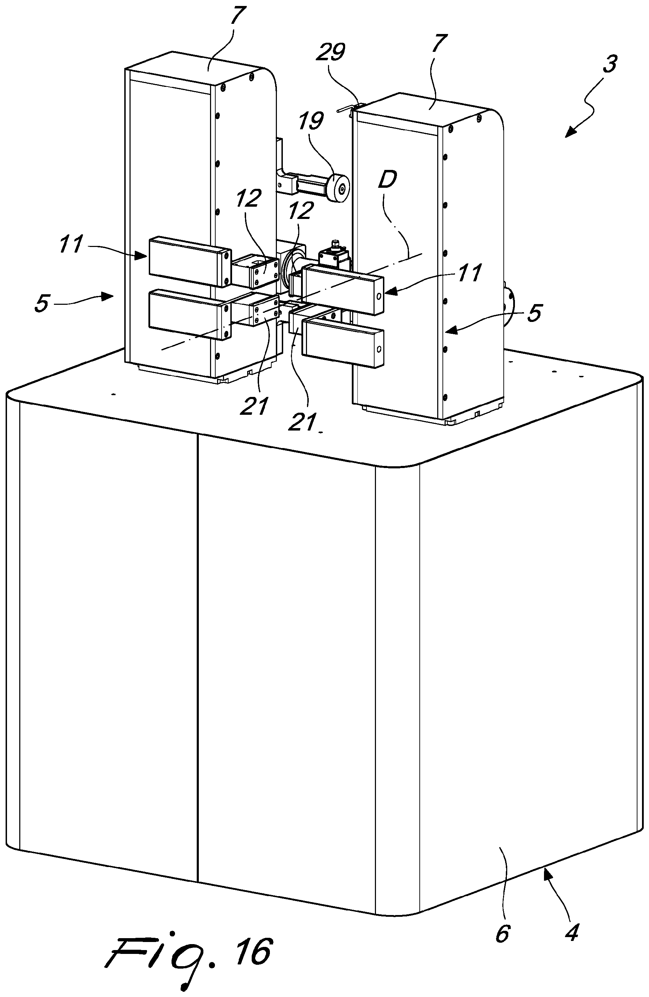

In an alternative embodiment (Figures 15-16) the assembly station 3 comprises two working units 5 of the type described above, arranged mirror-symmetrically on opposite sides of the work path D. The two working units 5 are aligned with each other transversely to the work path D. In this case the apparatus 1 can process both semi-finished products S made up of the profile parts S1 and S2 and of a single connecting partition B (Figure 4), by activating a single working unit 5, and semi-finished products S made up of the profile parts S1 and S2 and of two connecting partitions B (Figure 17), by activating both working units 5.

In this case the detection means described above can be only for the assembly station 3 and comprise a first sensor 29, a second sensor 30, a third sensor 31 and a fourth sensor 32 for actuating both of the working units 5.

With reference to a processing cycle for obtaining a semi-finished product S made up of the profile parts S1 and S2 and of a single connecting partition B, the operation of the apparatus 1 is the following.

The first profile part S1 is loaded on the resting surface 14 of the transfer unit 2 arranged along the work path D, with the at least one first slot C1 directed upwards and the front end, with respect to the direction of advancement A, at the knurling tool 9. The resting surface 14 is positioned at a first work height along the second adjustment axis A2, calculated by the electronic management and control unit as a function of the geometry and of the dimensions of the first profile part S1.

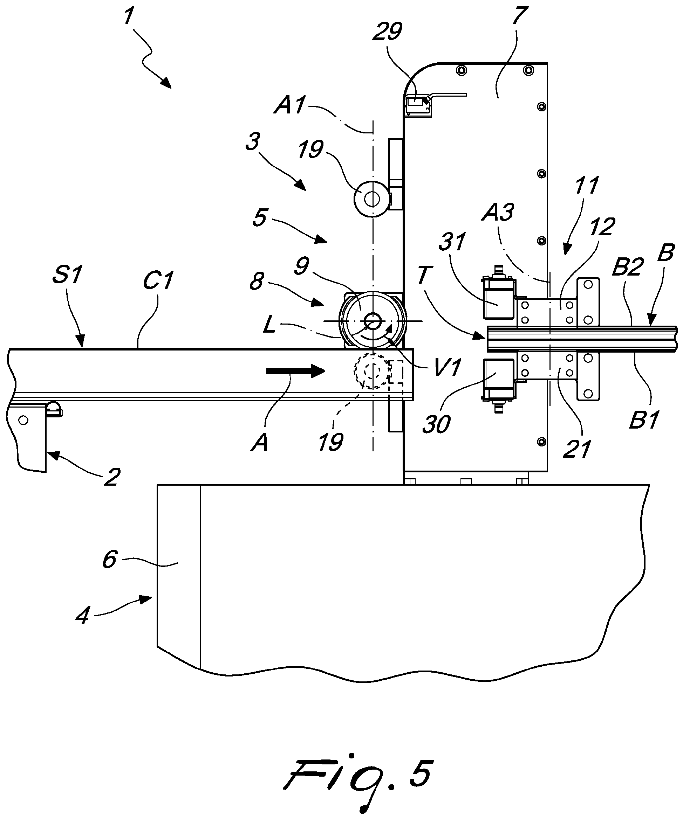

The connecting partition B is positioned between the gripper 12 clamped on the second edge B2 in the grip configuration, and the guide 21 arranged in the work configuration in contact with the first edge B1. It should be noted that an end portion T of the connecting partition B is kept protruding from the gripper 12 toward the knurling tool 9 (Figure 5).

The height of the work configuration at which the connecting partition B is positioned is calculated by the electronic unit as a function of the geometry and of the dimensions of the profile parts S1 and S2 being processed and remains the same for the entire processing cycle.

The electronic unit positions the knurling tool 9 in the first position along the first adjustment axis A1 and the lower contrast member 19 in the work configuration in contact with the first profile part S1.

When the first sensor 29 detects the presence of the first profile part S1 at the knurling assembly 8, the electronic management and control unit actuates the rotation of the knurling tool 9 in the first direction V1.

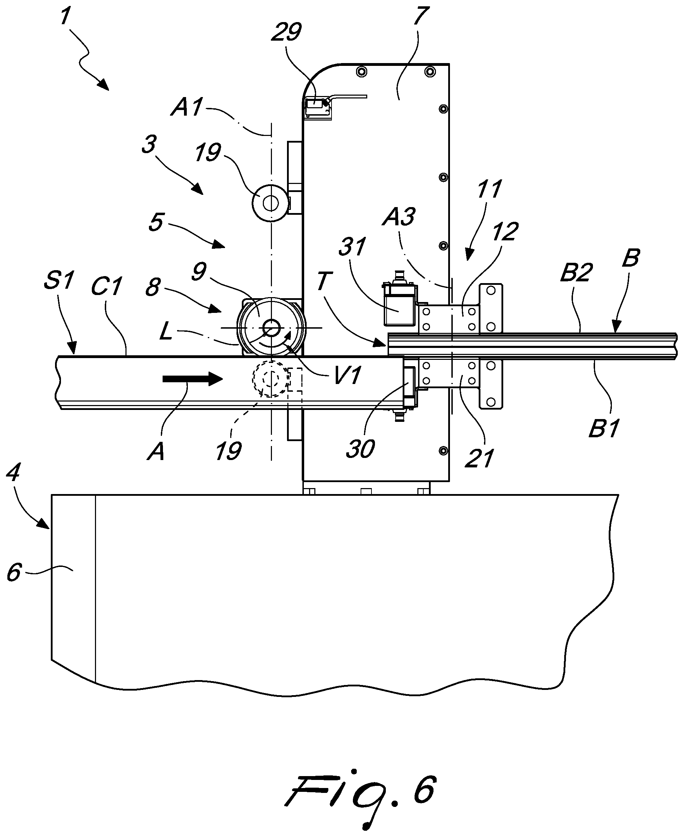

The first profile part S1, pushed by the action of the knurling tool 9 along the work path D in the direction of advancement A, approaches the connecting partition B to move along the end portion T with the corresponding first edge B1 slid into the first slot C1 (Figure 6). Preferably in this first insertion step the rotation speed of the knurling tool 9 is kept low.

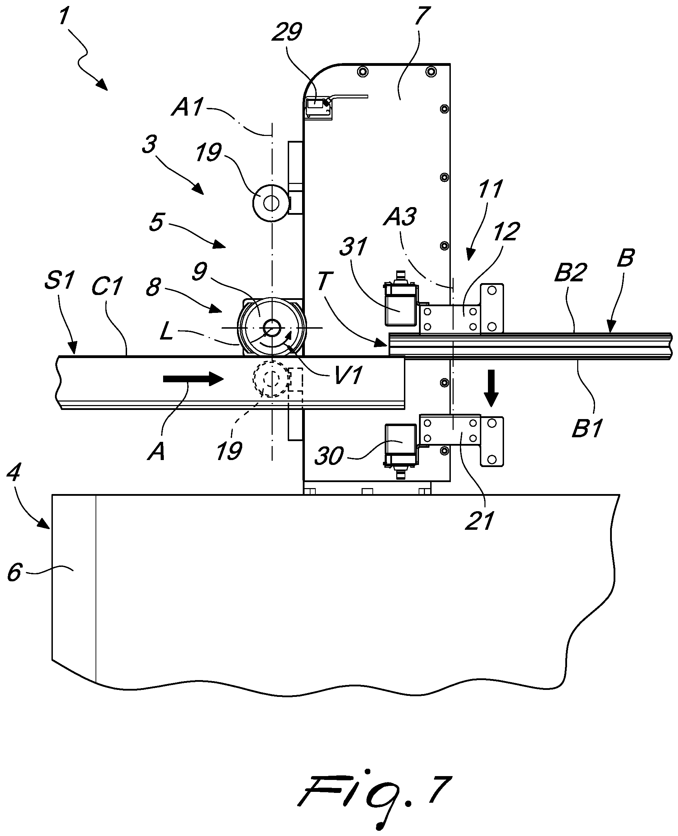

When the second sensor 30 detects the presence of the first profile part S1 upstream of the guide 21, the electronic unit temporarily deactivates the means 10 for rotary actuation of the knurling tool 9 and actuates the fifth means of actuation 22 in order to move the guide 21 to the rest configuration (Figure 7) so as to allow the passage of the first profile part S1.

Then the electronic unit reactivates the means 10 for rotary actuation of the knurling tool 9, again in the first direction V1 and with a higher speed than previously, to complete the knurling of the first slot C1 and the insertion along the connecting partition B.

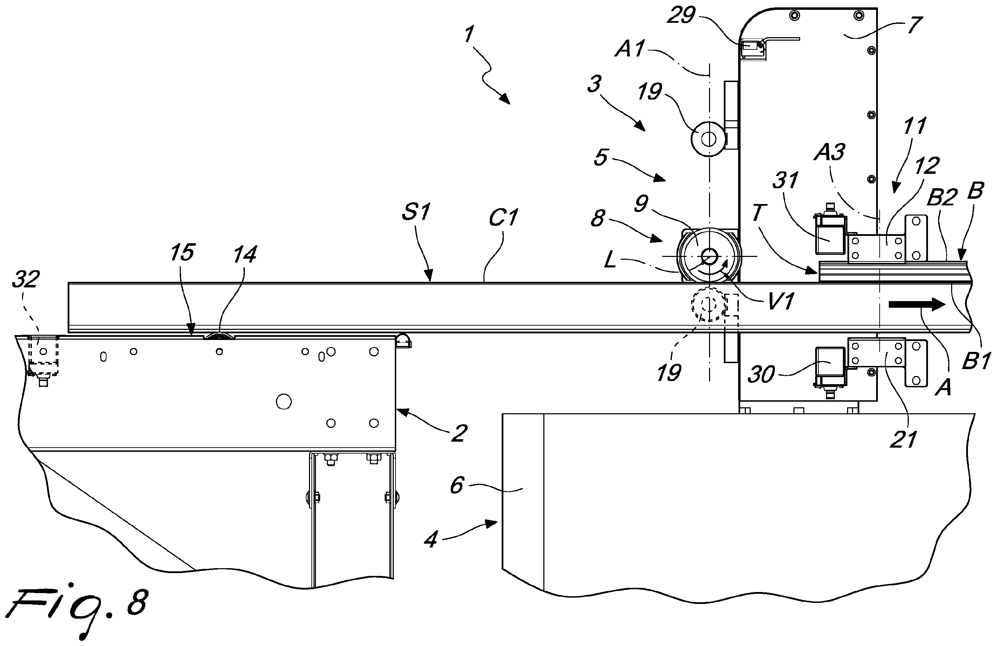

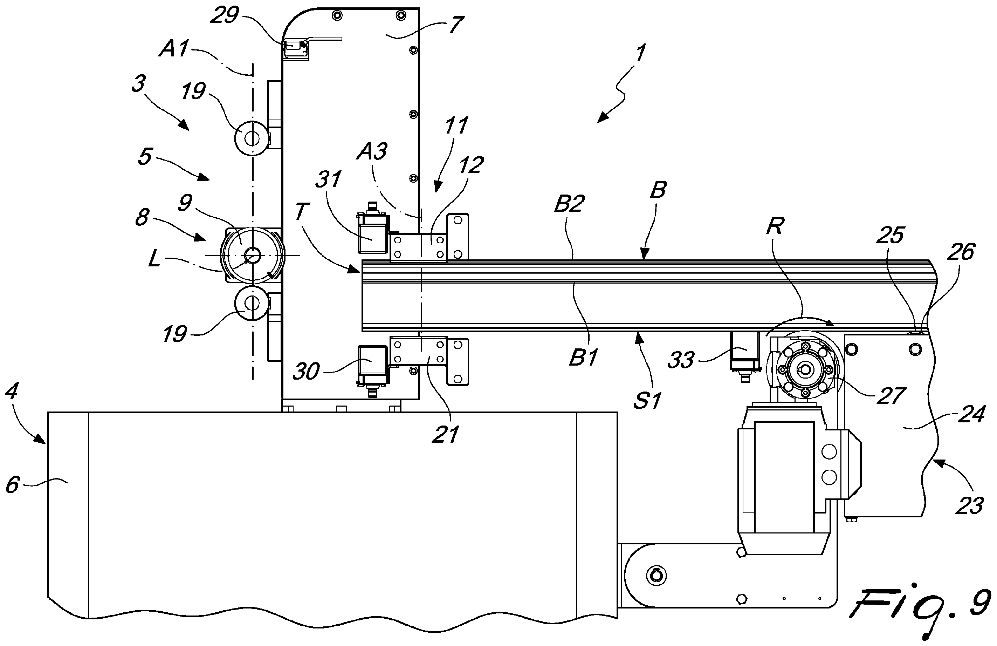

When the rear end of the first profile part S1 passes the fourth sensor 32, the electronic unit reduces the rotation speed of the knurling tool 9 (Figure 8), until it comes to a stop when the first sensor 29 detects the absence of the first profile part S1 (Figure 9).

At this point the electronic unit activates the displacement means, if present, to complete the insertion of the first profile part S1 along the connecting partition B.

Before beginning the processing of the second profile part S2 the electronic unit actuates the positioning of the resting surface 14 at a second work height along the second adjustment axis A2, of the knurling tool 9 in the second position along the first adjustment axis A1, and of the upper contrast member 19 in the work configuration.

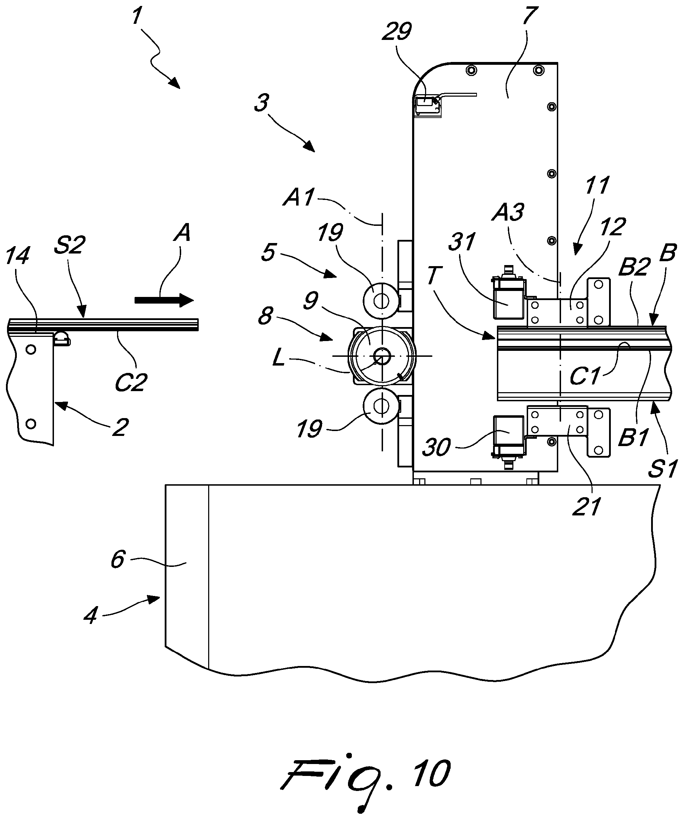

The second profile part S2 is then positioned on the resting surface 14 along the work path D (Figure 10) and is moved toward the knurling tool 9.

When the first sensor 29 detects the presence of the second profile part S2 at the knurling assembly 8, the electronic management and control unit actuates the rotation of the knurling tool 9 in the second direction V2.

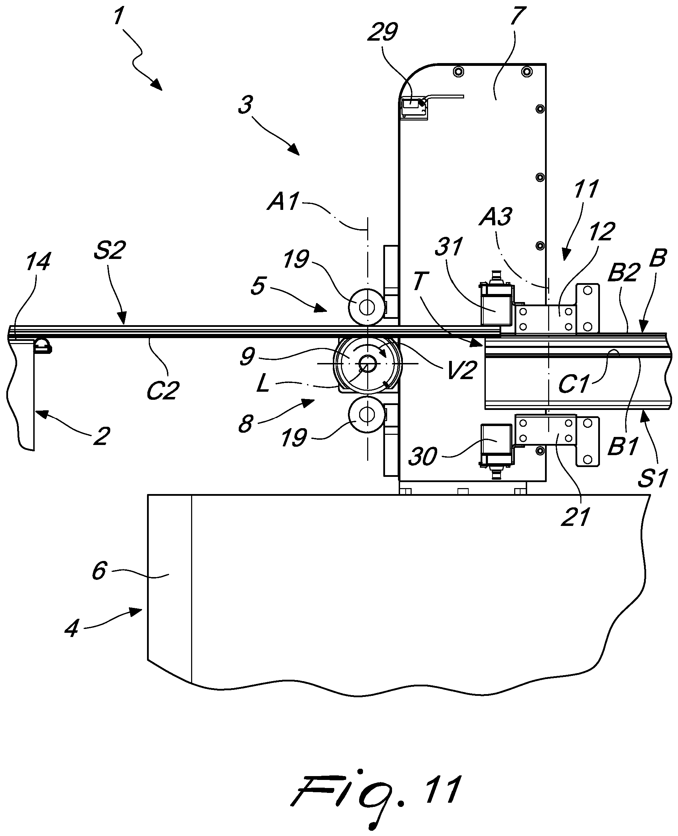

The second profile part S2, pushed by the action of the knurling tool 9 along the work path D in the direction of advancement A, approaches the connecting partition B to move along the end portion T with the corresponding second edge B2 slid into the second slot C2 (Figure 11). Preferably in this first insertion step the rotation speed of the knurling tool 9 is kept low.

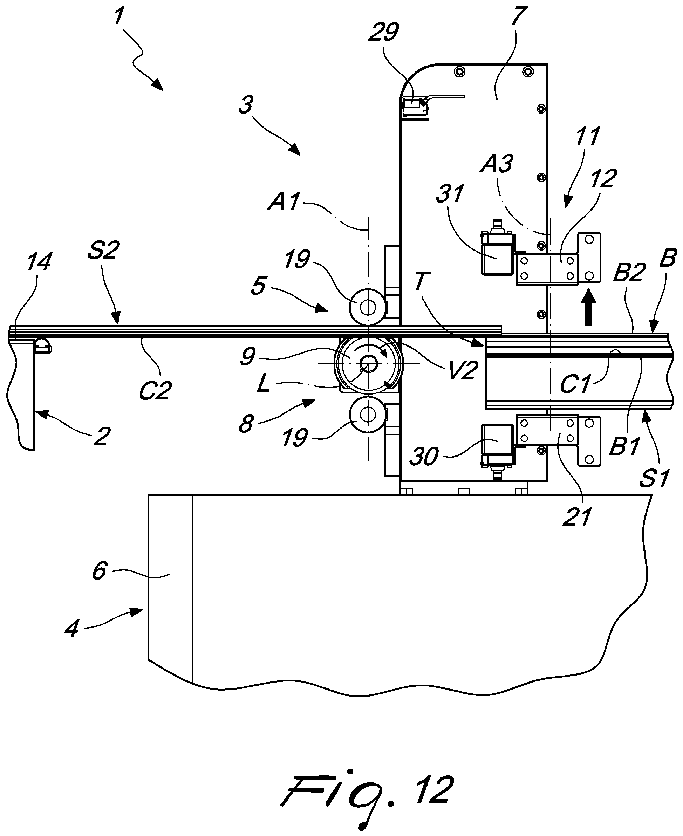

When the third sensor 31 detects the presence of the second profile part S2 upstream of the gripper 12, the electronic unit temporarily deactivates the means 10 for rotary actuation of the knurling tool 9 and actuates the third means of actuation in order to move the gripper 12 to the release configuration (Figure 12) so as to allow the passage of the second profile part S2.

In this condition the connecting partition B still remains in the original position because it is coupled in the first slot C1 of the first profile part S1 which is resting on the resting surface 25.

Simultaneously, the stroke limiting abutment 28 is brought to the active configuration.

Then the electronic unit reactivates the means 10 for rotary actuation of the knurling tool 9, again in the second direction V2 and with a higher speed than previously, to complete the knurling of the second slot C2 and the insertion along the connecting partition B.

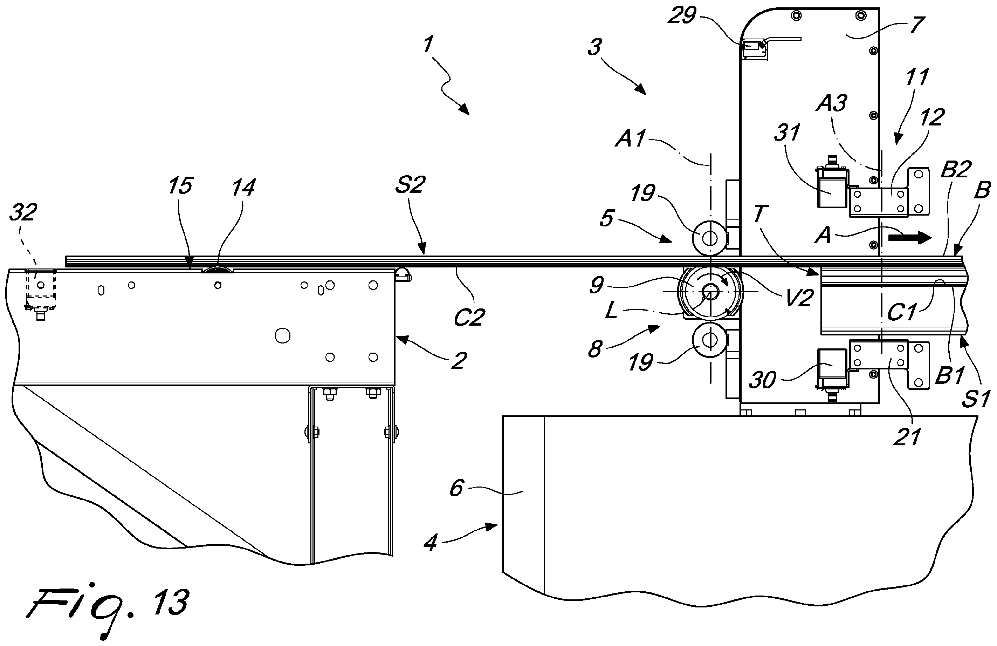

When the rear end of the second profile part S2 passes the fourth sensor 32, the electronic unit reduces the rotation speed of the knurling tool 9 (Figure 13), until it comes to a stop when the first sensor 29 detects the absence of the second profile part S2.

At this point the electronic unit activates the rotation of the motorized roller 27 to complete the transfer of the profile parts S1 and S2 and of the connecting partition B along the work path in the direction of advancement A, until they are brought into abutment against the stroke limiting abutment 28, so completing the insertion of the profile parts along the partition so as to obtain a semi-finished product S.

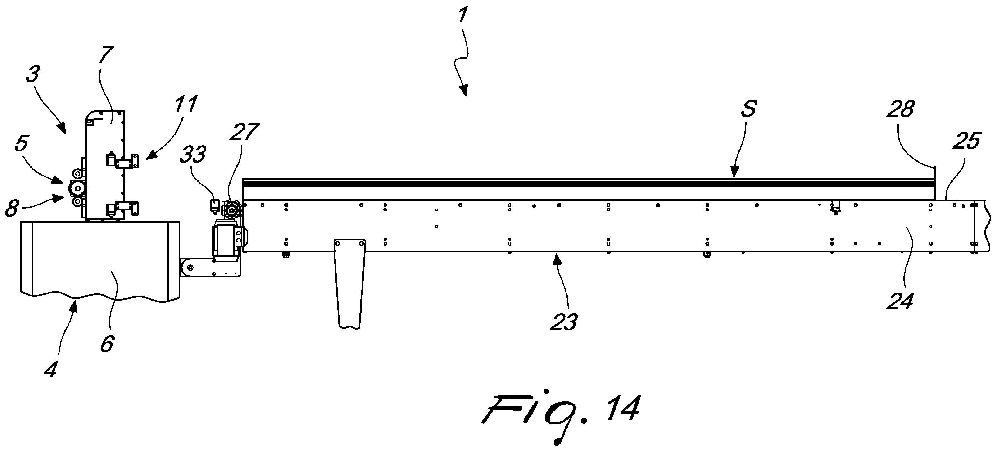

When the end of the first profile part S1 passes the fifth sensor 33, the electronic unit deactivates the motorized roller 27 (Figure 14).

If the apparatus 1 is provided with two working units 5, each one of them simultaneously replicates the operating steps described above on the profile parts S1 and S2 with reference to a respective first and second slot C1 and C2.

The invention also provides a method of assembling a semi-finished product S in order to obtain thermal-break profiles, which comprises substantially the following steps:
- a step of providing a first profile part S1 provided with at least one first longitudinal slot C1, a second profile part S2 provided with at least one corresponding second longitudinal slot C2, and at least one connecting partition B having a first and a second edge B1 and B2 which are mutually opposite,
- a first step of movement, along the work path D in the advancement direction A, of the first profile part S1 arranged at a first work height and with the at least one first slot C1 directed upwards through a work region in which the knurling of the first slot and the simultaneous insertion of the knurled first slot C1 along the corresponding first edge B1 of the connecting partition B are executed,
- a second step of movement, along the work path D in the advancement direction A, of the second profile part S2 arranged at a second work height and with the at least one second slot C2 directed downwards through the work region in which the knurling of the second slot and the simultaneous insertion of the knurled second slot C2 along the corresponding second edge B2 of the connecting partition B are executed so as to obtain a semi-finished product S for the production of a thermal-break profile,
during the abovementioned movement steps, the at least one connecting partition B being held stationary in a work configuration downstream of the work region along the work path D in the advancement direction A.

In practice it has been found that the invention fully achieves the intended aim and objects by providing an apparatus optimized for the assembly of semi-finished products for the production of thermal-break profiles which offers compact space occupation, which reduces the number of apparatuses required and which does not require any particular intervention from the trained operators, in particular for moving the profile parts during assembly.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102024000017266 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An apparatus (1) optimized for the assembly of semi-finished products (S) for the production of thermal-break profiles, of the type comprising a first and a second profile part (S1, S2) which are provided with a first and a second longitudinal slot (C1, C2) which are adapted to define at least one insertion seat for at least one corresponding connecting partition (B) having a first and a second edge (B1, B2) which are mutually opposite and adapted to be accommodated, respectively, in the first and in the second slot (C1, C2), **characterized in that** it comprises:
- at least one transfer unit (2) for the transfer in sequence, along a substantially horizontal work path (D), in an advancement direction (A), of a first profile part (S1) arranged with at least one first slot (C1) directed upwards and of a second profile part (S2) arranged with at least one corresponding second slot (C2) directed downwards, the first and the second slot (C1, C2) being adapted to be arranged so as to face each other to define an insertion seat for a corresponding connecting partition (B),
- an assembly station (3) arranged downstream of said transfer unit (2) along the work path (D) in the advancement direction (A), which comprises a frame (4) for supporting at least one working unit (5) which comprises:
- a knurling assembly (8), comprising a knurling tool (9) which is associated with means (10) for rotary actuation of bidirectional type about a respective working axis (L), substantially horizontal and perpendicular to said work path (D), and is associated with said frame (4) with a position that can be varied along a first adjustment axis (A1), substantially vertical, the knurling tool (9) being positioned in a first position along the first adjustment axis (A1) and being rotationally actuated in a first direction (V1) about said working axis (L) for the machining of the first slot (C1) and being positioned in a second position along the first adjustment axis (A1) and being rotationally actuated in a second direction (V2) about said working axis (L) for the machining of the second slot (C2), and
- an insertion assembly (11) for the insertion of a connecting partition (B) along the first slot (C1) and, subsequently, along the second slot (C2) to obtain a semi-finished product (S) for the production of a thermal-break profile, which comprises a gripper (12) for retaining said partition which is associated with said frame (4) downstream of said knurling tool (9) along the work path (D) in the advancement direction (A) so that it can be moved between a grip configuration and a release configuration, in the grip configuration the gripper (12) being adapted to grip the connecting partition (B) at the second edge (B2) arranged above the first edge (B1).

2. The apparatus (1) according to claim 1, **characterized in that** said at least one transfer unit (2) comprises a supporting structure (13) for a resting surface (14) of said first and said second profile part (S1, S2), which is substantially horizontal and is associated with said supporting structure (13) with a position that can be varied along a second adjustment axis (A2) which is substantially vertical, the resting surface (14) being arrangeable at different work heights along the second adjustment axis (A2).

3. The apparatus (1) according to claim 1, **characterized in that** said knurling assembly (8) comprises second means of actuation with alternating translation, along said first adjustment axis (A1), of said knurling tool (9).

4. The apparatus (1) according to claim 1, **characterized in that** said gripper (12) is associated with said frame (4) with a position that can be varied along a third adjustment axis (A3), substantially vertical, the grip and release configurations lying along said third axis.

5. The apparatus (1) according to claim 4, **characterized in that** said insertion assembly (11) comprises third means of actuation of said gripper (12) with alternating translation along said third adjustment axis (A3).

6. The apparatus (1) according to claim 1, **characterized in that** said knurling assembly (8) comprises at least one contrast member (19) of said knurling tool (8) associated with said frame (4) so that it can be moved between at least one work configuration and a rest configuration.

7. The apparatus (1) according to claim 6, **characterized in that** said knurling assembly (8) comprises fourth means of actuation for moving said at least one contrast member (19) between the work configuration and the rest configuration.

8. The apparatus (1) according to one or more of claims 6-7, **characterized in that** it comprises two of said contrast members (19) arranged on opposite sides of said knurling tool (9) along the first adjustment axis (A1), one of which is adapted to cooperate with the first profile part (S1) in the work configuration and the other is adapted to cooperate with the second profile part (S2) in the work configuration.

9. The apparatus (1) according to one or more of the preceding claims, **characterized in that** said insertion assembly (11) comprises at least one supporting guide (21) which is arranged below said gripper (12) and associated with said frame (4) so that it can be moved between a work configuration and a rest configuration.

10. The apparatus (1) according to one or more of the preceding claims, **characterized in that** it comprises a spacing unit (23) which is arranged downstream of said assembly station (3) along said work path (D) in the advancement direction (A) and comprises a load-bearing structure (24) which supports a resting surface (25) for the first profile part (S1) with the at least one connecting partition (B) during assembly with the second profile part (S2), so as to obtain said semi-finished product (S).

11. The apparatus (1) according to claim 10, **characterized in that** said spacing unit (23) comprises a stroke limiting abutment (28) which can be moved between an active configuration, in which it protrudes above said resting surface (25) along said work path (D), and a rest configuration, in which it is displaced with respect to said active configuration.

12. The apparatus (1) according to one or more of the preceding claims, **characterized in that** it comprises detection means (29, 30, 31, 32, 33) for detecting the position of the first and the second profile part (S1, S2) along said work path (D) and electronic management and control means functionally associated in input with said detection means (29, 30, 31, 32, 33) and in output with said assembly station (3), said transfer unit (2), and said spacing unit (23).

13. The apparatus (1) according to one or more of the preceding claims, **characterized in that** said assembly station (3) comprises two of said working units (5) arranged on opposite sides of the work path (D), each one adapted to act on a respective first slot (C1) of the first profile part (S2) and on a corresponding second slot (C2) of the second profile part (S2) and to insert a corresponding connecting partition (B) along the seat defined between the respective first slot and second slot (C1, C2).

14. A plant for the production of thermal-break profiles, **characterized in that** it comprises an apparatus (1) according to one or more of claims 1-13 and a rolling machine arranged downstream of said apparatus along the work path (D) in the advancement direction (A).

15. A method for assembling semi-finished products (S) for obtaining thermal-break profiles, of the type comprising a first profile part and a second profile part (S1, S2) which are provided with respective longitudinal slots (C1, C2) which are adapted to define at least one insertion seat for at least one corresponding connecting partition (B), **characterized in that** it comprises the following steps:
- a step of providing a first profile part (S1) provided with at least one first longitudinal slot (C1), a second profile part (S2) provided with at least one corresponding second longitudinal slot (C2), and at least one connecting partition (B) having a first and a second edge (B 1, B2) which are mutually opposite,
- a first step of movement, along a work path (D) in an advancement direction (A), of said first profile part (S1) arranged at a first work height and with the at least one first slot (C1) directed upwards through a work region in which the knurling of said first slot and the simultaneous insertion of the knurled first slot (C1) along the corresponding first edge (B1) of the connecting partition (B) are executed,
- a second step of movement, along the work path (D) in the advancement direction (A), of said second profile part (S2) arranged at a second work height and with the at least one second slot (C2) directed downwards through said work region in which the knurling of said second slot and the simultaneous insertion of said knurled second slot (C2) along the corresponding second edge (B2) of the connecting partition (B) are executed so as to obtain a semi-finished product (S) for the production of a thermal-break profile,
during said movement steps, the at least one connecting partition (B) being held stationary in a work configuration downstream of said work region along the work path (D) in the advancement direction (A).
